# EUROPÄISCHE PATENTSCHRIFT

(11) **EP 3 603 366 B1**
(45) Veröffentlichungstag und Bekanntmachung des Hinweises auf die Patenterteilung: **10.03.2021**
(21) Anmeldenummer: 19172931.8
(22) Anmeldetag: 07.05.2019
(51) Int. Cl.: A01B 59/041, B60D 1/30, B60D 1/44, B60D 1/02

(54) **ARRETIERVORRICHTUNG FÜR EIN ZUGPENDEL**
LOCKING DEVICE FOR A DRAW BAR
DISPOSITIF D'ARRÊT POUR UNE BARRE D'ATTELAGE

(30) Priorität: 30.07.2018 DE 102018005936
(43) Veröffentlichungstag der Anmeldung: 05.02.2020
(73) Patentinhaber: CLAAS Tractor S.A.S., 78141 Vélizy-Villacoublay Cedex (FR)
(72) Erfinder: Hautefeuille, Nicolas, 91140 Villebon Sur Yvette (FR); Chartier, Aurélien, 78440 Issou (FR); Riault, Edouard, 75015 Paris (FR)
(74) Vertreter: CLAAS Gruppe

(56) Entgegenhaltungen:
- DE-B- 1 168 146
- US-A- 2 467 593
- US-A- 3 795 415
- US-A1- 2004 056 448

## Beschreibung

Die vorliegende Erfindung betrifft eine Arretiervorrichtung zum Arretieren eines Zugpendels an einer landwirtschaftlichen Arbeitsmaschine, insbesondere an einem Traktor.

Ein Zugpendel ist eine Anhängevorrichtung, die eine bodennahe Anhängung diverser Arbeitsgeräte oder Anhänger an eine Arbeitsmaschine ermöglicht. Dazu ist das Zugpendel üblicherweise nach hinten weisend als tiefster Punkt mittig am Heck der Arbeitsmaschine angebracht und ist prinzipiell horizontal zu beiden Seiten beweglich. Beim spurversetzten Arbeiten kann es nötig sein, das Zugpendel seitwärts gegen die Mitte der Arbeitsmaschine versetzt zu fixieren.

Zur Fixierung des Zugpendels ist es an sich bekannt, zwei in Querrichtung der Arbeitsmaschine orientierte Holme, zwischen denen sich das Zugpendel erstreckt, mit Öffnungen zu versehen, in die Bolzen eingesteckt werden können, um die Bewegungsfreiheit des Zugpendels einzuschränken. Diese Bolzen berühren das Zugpendel jeweils nur auf einer sehr kleinen Fläche. Daher müssen hohe Anforderungen an die Härte und Verschleißfestigkeit der einander berührenden Oberflächen von Bolzen und Zugpendel gestellt werden, die nur durch hochpreisige Werkstoffe zu erfüllen sind.

Aus DE 10 344 555 B4 ist eine Arretiervorrichtung für ein Zugpendel der oben beschriebenen Art bekannt, bei der, um ein Seitwärtsspiel des Zugpendels zwischen den Bolzen zu minimieren, zwei im Querschnitt sechseckige Hülsen zwischen den Holmen fixiert werden, indem jeweils ein Bolzen eine Längsbohrung der Hülse durchsetzt. Die Längsbohrung ist exzentrisch, so dass durch Drehen der Hülse vor dem Einschieben des Bolzens unterschiedliche Materialstärken der Hülse zwischen Bolzen und Zugpendel eingestellt und so das Spiel des Zugpendels minimiert werden kann. Da vor dem Einschieben des Bolzens nicht erkennbar ist, wie groß die Materialstärke der Hülse zwischen Bolzen und Zugpendel ist, ist das Minimieren des Spiels nur durch Ausprobieren möglich und dementsprechend zeitaufwendig. Sobald der Bolzen herausgezogen ist, ist die Hülse ungesichert und kann herabfallen und verlorengehen.

Aus der DE 1 168 146 B ist eine Arretiervorrichtung für ein Zugpendel der oben beschriebenen Art bekannt, wobei Bolzen mit einem quaderförmigen Kopf in Bohrungen eines Holms eingesteckt werden, die beidseitig des Zugpendels in dem Holm angeordnet sind. Das Zugpendel liegt an den Seitenflächen der Köpfe der Bolzen an.

Aus der US 2,467,593 A ist es bekannt, Schrauben mit Sechskantkopf zur Fixierung der Lage des Zugpendels zu verwenden. Das Zugpendel liegt an einer der Seitenflächen der Schraubenköpfe an.

Eine weitere Arretiervorrichtung ist aus der US 3,795,415 A bekannt, welche zur Fixierung des Zugpendels Bolzen mit quaderförmigem Querschnitt vorsieht, die in den Holm eingesteckt werden. Das Zugpendel liegt an einer der Seitenflächen der abschnittsweise aus dem Holm herausragenden Bolzen an.

Eine weitere Arretiervorrichtung ist aus der US 2004/056448 A1 bekannt. 11

Aufgabe der Erfindung ist, eine sicherer nutzbare und einfacher zu optimierende Arretiervorrichtung zu schaffen.

Die Aufgabe wird gelöst durch eine Arretiervorrichtung nach Anspruch 1. Die Unteransprüche betreffen weitere vorteilhafte Ausgestaltungen der Erfindung.

Indem die Kontaktfläche Teil des Bolzens ist, ist ein unbemerktes Verlorengehen weitgehend ausgeschlossen. Die Planarität der Kontaktfläche erlaubt es, die zwischen Zugpendel und Bolzen auftretenden Kräfte über eine große Fläche zu verteilen und dadurch die Anforderungen an die verwendeten Werkstoffe zu reduzieren.

Erfindungsgemäß ist vorgesehen, dass der erste Lagerbereich und der Feststellbereich entlang einer Längsachse des Bolzens aufeinander folgen und der Querschnitt des Feststellbereichs nicht über den Querschnitt des ersten Lagerbereichs übersteht. So kann der erste Lagerbereich durch den Holm hindurchgeschoben und mit dem Zugpendel in Kontakt gebracht werden, während gleichzeitig der erste Lagerbereich in der Öffnung des Holms steckt.

Für die Belastbarkeit des Bolzens ist es wichtig, dass der Bolzen einen zweiten Lagerbereich zum Einstecken in eine Öffnung eines zweiten Holms aufweist, der sich koaxial zum ersten Lagerbereich erstreckt, und dass der Feststellbereich zwischen den Lagerbereichen angeordnet ist.

Damit der Bolzen in jeder Orientierung den Zwischenraum zwischen den Holmen passieren kann, ohne vom Zugpendel blockiert zu werden, wenn sich letzteres in der zu arretierenden Stellung befindet, sollte der zweite Lagerbereich einen Querschnitt aufweisen, der nicht über den Querschnitt des Feststellbereichs übersteht.

Der zweite Lagerbereich kann eine quer zur Längsachse orientierte Bohrung aufweisen, um einen Sicherungsstift aufnehmen zu können, der den Bolzen gegen ein Herausrutschen aus den Öffnungen der Holme formschlüssig sichert.

Um die Bewegungsfreiheit des Zugpendels wirksam minimieren zu können, sollte der Feststellbereich mehrere Kontaktflächen aufweisen, die entlang seines Umfangs aufeinanderfolgen, so dass sie durch Drehen des Bolzens um seine Längsachse wahlweise am Zugpendel zur Anlage gebracht werden können, und die jeweils unterschiedlich weit von einer Mittelachse des Bolzens entfernt sind.

Vorzugsweise sollten eine Kontaktfläche mit minimalem Abstand von der Längsachse und eine Kontaktfläche mit maximalem Abstand von der Längsachse entlang einer gemeinsamen Kante aneinandergrenzen, und zwischen einer von der gemeinsamen Kante abgewandten Kante der Kontaktfläche mit minimalem Abstand und einer von der gemeinsamen Kante abgewandten Kante der Kontaktfläche mit maximalem Abstand sollten Kontaktflächen mit schrittweise zunehmenden Abstand von der Längsachse aufeinander folgen. So kann durch schrittweises Drehen des Bolzens je nach Drehrichtung der Abstand zwischen der am Zugpendel anliegenden Kontaktfläche und der Längsachse schrittweise vergrößert oder verkleinert und somit systematisch die ideale Einstellung gesucht werden.

Orientierungen, die der Bolzen einnehmen kann, können diskret vorgegeben werden, indem der Querschnitt eines der Lagerbereiche ein gleichseitiges Vieleck ist und in eine komplementäre, ebenfalls vieleckige Öffnung eines der Holme drehfest eingreift. Um in jeder dieser diskreten Orientierungen einen flächigen Kontakt zwischen einer der Kontaktflächen des Feststellbereichs und dem Zugpendel zu ermöglichen, sollte der Querschnitt des Feststellbereichs dann ein - im Allgemeinen nicht gleichseitiges - Vieleck mit gleicher Eckenzahl wie das Vieleck des einen Lagerbereichs sein.

Entlang des wenigstens einen Holms können mehrere Öffnungen mit zum Querschnitt des einen Lagerbereichs komplementärem Querschnitt verteilt sein. Die Querschnitte dieser Öffnungen sollten schrittweise gegeneinander verdreht sein, damit derselbe Bolzen in jeder dieser Öffnungen eine Orientierung einnehmen kann, in der seine Kontaktfläche flächig am Zugpendel anliegt.

Denkbar ist aber auch, den Lagerbereich und die ihn aufnehmenden Öffnungen des Holms kreisrund auszubilden, so dass die Orientierung des Bolzens allein durch den Kontakt von dessen Kontaktfläche mit dem Zugpendel bestimmt werden kann.

Alternativ kann die oben erwähnte quer zur Längsachse orientierte Bohrung des zweiten Lagerbereichs genutzt werden, um diskrete Drehorientierungen vorzugeben, in denen der Bolzen montiert werden kann. Zu diesem Zweck können entlang des wenigstens zweiten Holms verteilte Öffnungen, in die der zweite Lagerbereich einsteckbar ist, jeweils wenigstens zum Teil durch an den zweiten Holm angefügte Rohrabschnitte gebildet sein, und die Bohrung des zweiten Lagerbereichs verlängernde Bohrungen können in den Rohrabschnitten gebildet sein, so dass der Bolzen durch einen Stift gesichert werden kann, der in die Bohrung des zweiten Lagerbereichs und eine verlängernde Bohrung eingreift.

An einem freiliegenden Ende des Bolzens kann eine Richtungsmarkierung angebracht sein, die es dem Benutzer erlaubt, eindeutig zu erkennen, in welcher Drehorientierung sich der Bolzen befindet.

Weitere Merkmale und Vorteile der Erfindung ergeben sich aus der nachfolgenden Beschreibung von Ausführungsbeispielen unter Bezugnahme auf die beigefügten Zeichnungen. Es zeigen:
- Fig. 1: eine Ansicht eines Zugpendels und seiner Aufhängung am Heck einer landwirtschaftlichen Arbeitsmaschine in einer mittigen Stellung;
- Fig. 2: eine Ansicht des Zugpendels in seitwärts ausgelenkter Stellung;
- Fig. 3: eine perspektivische Ansicht eines zum Fixieren des Zugpendels in der Aufhängung der Fig. 1 und 2 verwendeten Bolzens;
- Fig. 4: den Bolzen in einer Draufsicht entlang seiner Längsachse;
- Fig. 5: eine alternative Ausgestaltung des Bolzens und einen Ausschnitt eines einen Lagerbereich des Bolzens aufnehmenden Holms.

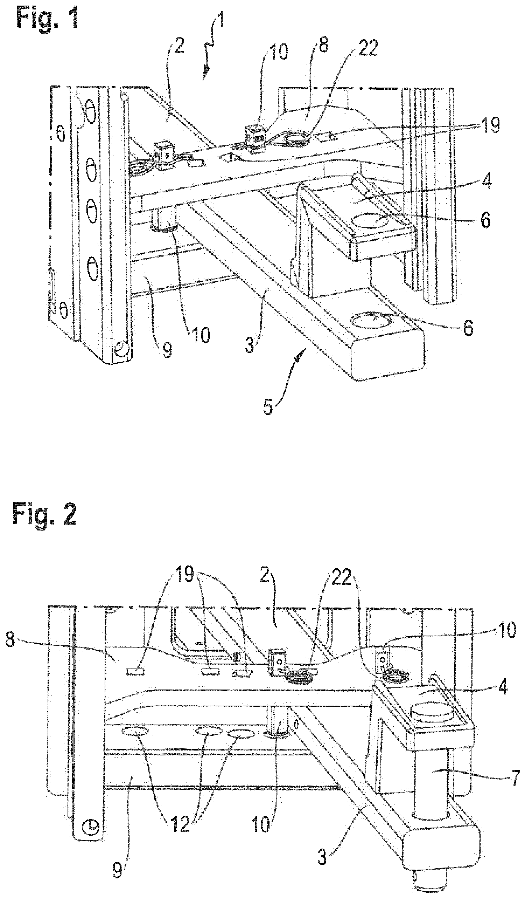

Fig. 1 zeigt ein Zugpendel 1 und dessen Aufhängung am Heck einer landwirtschaftlichen Arbeitsmaschine wie etwa eines Traktors in einer perspektivischen Ansicht. Das Zugpendel 1 umfasst hier eine gerade Stange 2 mit ebenen seitlichen Flanken 3 sowie einen von einer Oberseite der Stange 2 aufragenden Haken 4. Ein vom Betrachter abgewandtes, in der Fig. nicht sichtbares vorderes Ende der Stange 2 ist um eine vertikale Achse schwenkbar an das Chassis des Traktors angelenkt. Eine Kupplung 5 für eine anzuhängende Last, einen Anhänger, ein arbeitswerkzeug oder dergleichen ist am hinteren Ende der Stange 2 gebildet, hier durch miteinander fluchtende Bohrungen 6 der Stange 2 und des Hakens 4, in die wie in Fig. 2 gezeigt ein Pflock 7 eingesteckt werden kann, um eine Zugöse eines Anhängers oder dergleichen an das Zugpendel 1 formschlüssig anzukoppeln. Die Kupplung 5 könnte auch durch einen an sich bekannten und hier nicht gezeichneten, vom hinteren Ende der Stange aufragenden Kugelkopf oder dergleichen gebildet sein.

Die Stange 2 des Zugpendels verläuft durch einen Durchgang zwischen zwei sich in Querrichtung des Traktors erstreckenden Holmen 8, 9. Dieser Durchgang bietet der Stange 2 allenfalls geringes Spiel in der Vertikalen, in Fahrzeugquerrichtung ist er langgestreckt, um eine Schwenkbewegung des Zugpendels 1 um die vertikale Achse und damit eine Seitwärtsbewegung der Kupplung 5 zu ermöglichen.

Damit der Widerstand, den eine Zuglast beim Fahren auf die Kupplung 5 ausübt, kein Drehmoment auf die Arbeitsmaschine ausüben kann, sollte die Kupplung 5 bei normaler Geradeausfahrt, bei der die Fahrtrichtung mit der Längsrichtung der Arbeitsmaschine übereinstimmt und die Hinterräder der Arbeitsmaschine jeweils in den Spuren ihrer Vorderräder laufen, in einer Längsmittelebene der Arbeitsmaschine liegen. In der Anordnung der Fig. 1 verläuft die Stange 2 in dieser Längsmittelebene und ist in dieser Orientierung durch zwei Bolzen 10 fixiert, die Öffnungen der Holme 8, 9 durchsetzen und an den Flanken 3 der Stange 2 anliegen.

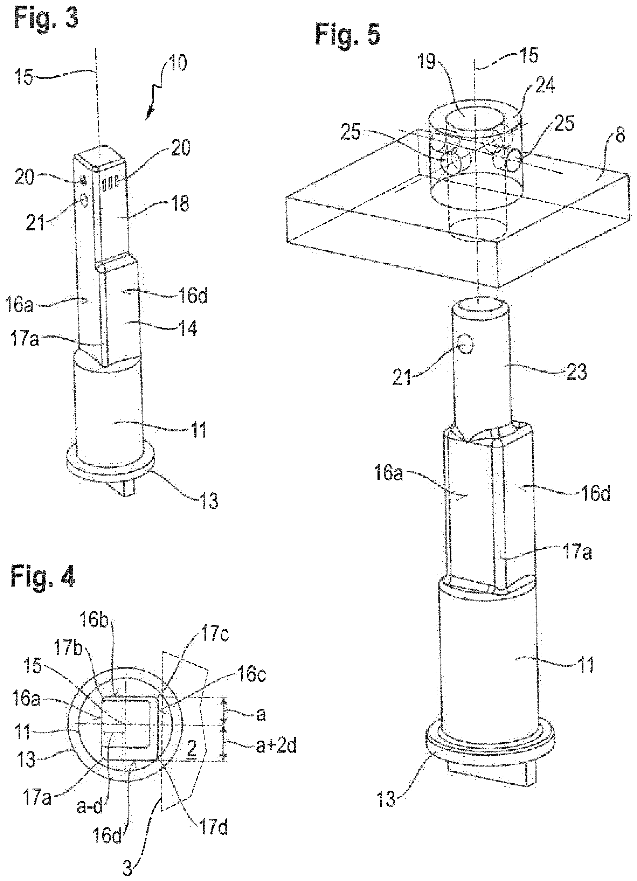

Fig. 3 zeigt einen dieser Bolzen 10 in einer perspektivischen Ansicht. Der Bolzen 10 ist einstückig aus Stahl gefertigt. Ein erster Lagerbereich 11 des Bolzens 10 ist zylindrisch und ist vorgesehen, um in einer runden Öffnung 12 (siehe Fig. 2) des unteren Holms 9 aufgenommen zu werden. Der erste Lagerbereich 11 ist nach unten durch einen Flansch 13 begrenzt, der einen etwas größeren Durchmesser als der erste Lagerbereich 11 und die Öffnung 12 hat und beim Einschieben des Bolzens 10 von unten in die Öffnung 12 als die Eindringtiefe begrenzender Anschlag dient. Nach oben schließt an den ersten Lagerbereich 11 ein Feststellbereich 14 von vieleckigem Querschnitt an. Der Querschnitt ist hier ein Rechteck mit Kantenlängen a, a+d. Der Mittelpunkt des rechteckigen Querschnitts ist gegen eine zum ersten Lagerbereich 11 konzentrische Längsachse 15 versetzt, wie insbesondere in der Draufsicht der Fig. 4 zu erkennen, so dass der Abstand der vier ebenen Kontaktflächen 16a-d, die den Umfang des Feststellbereichs 14 bilden, von der Längsachse 15 jeweils (a-d)2, a/2 (a+d)/2 und (a+2d)2 beträgt. Die Kontaktflächen 16a und 16d mit dem kleinsten und dem größten Abstand treffen an einer Kante 17a aufeinander, weitere Kanten 17b, c und d liegen jeweils zwischen Kontaktflächen 16a, b oder 16b, c bzw. 16c, d, deren Abstand von der Längsachse 15 sich jeweils um d/2 unterscheidet.

Wenn, wie in Fig. 4 angedeutet, der Bolzen 10 in Öffnungen links von der Stange 2 eingeschoben ist und sich dabei zeigt, dass zwischen der Flanke 3 und der ihr zugewandten Kontaktfläche, hier 16c, ein nicht vernachlässigbares Spiel verbleibt, dann kann der Bolzen 10 wieder herausgezogen, um 90° im Gegenuhrzeigersinn gedreht und wieder eingeschoben werden, um die Kontaktfläche mit nächstgrößerem Abstand, hier 16d, gegenüber der Flanke 3 zu platzieren und so das Spiel um d zu vermindern. Umgekehrt kann der Bolzen 10, wenn ein Überlapp des Feststellbereichs 14 mit der Stange 2 ein Einschieben verhindert, in 90°-Schritten im Uhrzeigersinn gedreht werden, um schrittweise Kontaktflächen mit kleinerem Abstand von der Längsachse 15 der Flanke 3 zuzuwenden, solange, bis der Überlapp aufgehoben ist und das Einschieben gelingt.

Das oben beschriebene Prinzip ist auf Feststellbereiche mit beliebigen Zahlen n>2 von Kontaktflächen verallgemeinerbar; ein geeigneter Querschnitt des Feststellbereichs kann konstruiert werden, indem ausgehend von einem zur Längsachse 15 konzentrischen regelmäßigen n-Eck aneinandergrenzende Kontaktflächen jeweils um 0, d, 2d, ..., (n-1)d zur Längsachse 15 hin, z.B. durch Abfräsen, parallel verschoben werden.

Ein zweiter Lagerbereich 18 des Bolzens 10 hat einen regelmäßig n-eckigen, hier quadratischen Querschnitt, dessen Mittelpunkt wieder mit der Längsachse 15 zusammenfällt. Indem dieser Lagerbereich 18 in Öffnungen 19 von ebenfalls quadratischem Querschnitt des oberen Holms 8 eingreift, sind die Orientierungen, die der Bolzen 10 einnehmen kann, unabhängig davon, ob die Flanke 3 tatsächlich an einer seiner Kontaktflächen 16a-d anliegt oder von dieser durch ein Restspiel beabstandet ist, von vornherein so eingeschränkt, dass die Flanke 3 und die betreffende Kontaktfläche einander parallel gegenüberliegen. Eine erhöhte Beanspruchung der Kanten 17a-d, die im Laufe der Zeit zu deren Verrundung und damit zu einer Verkleinerung der Kontaktflächen führen würde, kann so vermieden werden.

An einer Spitze des zweiten Lagerbereichs 18, die im montierten Zustand über die Oberseite des Holms 8 aufragt, ist über wenigstens einer der Kontaktflächen, hier den Kontaktflächen 16a mit dem kleinsten und 16d mit dem größten Abstand zur Längsachse 15, eine Markierung 20 angebracht. An dieser Markierung 20 kann ein Benutzer die Orientierung des Bolzens 10 ablesen, auch wenn dessen Feststellbereich 14 zwischen den Holmen 8, 9 verborgen und nicht sichtbar ist.

Eine Bohrung 21 verläuft quer zur Längsachse 15 durch den zweiten Lagerbereich 18. Die Bohrung 21 ist vorgesehen, um wie in Fig. 1 und 2 zu sehen, einen Splint 22 aufzunehmen, der, indem er auf der Oberseite des Holms 8 aufliegt, den Bolzen gegen Herausrutschen aus den Öffnungen 12, 19 sichert.

Wenn die Arbeitsmaschine im Hundegang fährt, d.h. wenn die Spuren von Hinter- und Vorderrädern nicht übereinfallen und die Fahrtrichtung von der Längsrichtung der Arbeitsmaschine abweicht, dann würde eine Zuglast, die auf die in der Längsmittelebene liegende Kupplung 5 einwirkt, ein Drehmoment auf die Arbeitsmaschine ausüben und das Geradeausfahren erschweren. Um dies zu verhindern, ist das Zugpendel 1 zur Seite schwenkbar und kann in der seitwärts verschwenkten Stellung, wie in Fig. 2 gezeigt, durch die Bolzen 10 fixiert werden.

Um das Zugpendel sowohl in der mittigen Stellung der Fig. 1 als auch in einer nach links bzw. nach rechts ausgelenkten Stellung fixieren zu können, werden für jeden der beiden Bolzen drei Sätze von Öffnungen 12, 19 der Holme 9, 8 benötigt. Damit in jeder dieser Öffnungen 12, 19 eine Kontaktfläche 16 der Flanke 3 parallel gegenüberliegen kann, muss der Tatsache Rechnung getragen werden, dass die Flanke 3 in jeder dieser Stellungen geringfügig anders orientiert ist. Deswegen sind die quadratischen Öffnungen 19 schrittweise gegeneinander verdreht.

Während die runden Öffnungen 12 des Holms 9 gebohrt werden können, ist die Anfertigung der quadratischen Öffnungen 19 durch Fräsen deutlich aufwendiger. Um diesen Aufwand zu vermeiden und dennoch sicherstellen zu können, dass eine der Kontaktflächen 16a-d auch dann parallel zur Flanke 3 ausgerichtet ist, wenn sie diese nicht berührt, ist gemäß einer in Fig. 5 gezeigten Abwandlung der eckige zweite Lagerbereich 18 durch einen zylindrischen, zur Längsachse 15 koaxialen zweiten Lagerbereich 23 ersetzt, und die Öffnung 19 setzt sich zusammen aus einer kreisrunden Bohrung durch den Holm 8 und einem an den Holm 8 angeschweißten, die Bohrung verlängernden Rohrstutzen 24. Zwei Bohrungen 25 kreuzen in rechtem Winkel zueinander und zur Längsachse 15 den Rohrstutzen 24. Wenn ein Splint 22 in die Bohrung 21 und eine der Bohrungen 25 eingeschoben ist, dann ist der Bolzen 10 drehfest im Rohrstutzen 24 fixiert. Es genügt daher, die Orientierung, in der der Rohrstutzen 24 am Holm 8 angeschweißt wird, so zu wählen, dass sie eine zur Flanke 3 parallele Ausrichtung einer der Kontaktflächen 16a-d gewährleistet.

### Bezugszeichenliste

- 1: Zugpendel
- 2: Stange
- 3: Flanke
- 4: Haken
- 5: Kupplung
- 6: Bohrung
- 7: Pflock
- 8: Holm
- 9: Holm
- 10: Bolzen
- 11: erster Lagerbereich
- 12: Öffnung
- 13: Flansch
- 14: Feststellbereich
- 15: Längsachse
- 16a-d: Kontaktfläche
- 17a-d: Kante
- 18: zweiter Lagerbereich
- 19: Öffnung
- 20: Markierung
- 21: Bohrung
- 22: Splint
- 23: zweiter Lagerbereich
- 24: Rohrstutzen
- 25: Bohrung

## Patentansprüche

1. Arretiervorrichtung zum Arretieren eines Zugpendels (1) an einer landwirtschaftlichen Arbeitsmaschine, insbesondere an einem Traktor, mit wenigstens einem Holm (8, 9), in dessen Längsrichtung das Zugpendel (1) verstellbar ist, und wenigstens einem in eine Öffnung (12) des Holms (8, 9) einsteckbaren Bolzen (10), der mindestens einen ersten Lagerbereich (11; 18, 23) zur Aufnahme in der Öffnung (12; 19) und einen Feststellbereich (14) zum Zusammenwirken mit dem Zugpendel (1) aufweist, wobei der Feststellbereich (14) mindestens eine im Wesentlichen plane Kontaktfläche (16a-d) zur Kontaktierung des Zugpendels (1) aufweist, wobei der erste Lagerbereich (11) und der Feststellbereich (14) entlang einer Längsachse (15) des Bolzens (10) aufeinander folgen, **dadurch gekennzeichnet, dass** der Querschnitt des Feststellbereichs (14) nicht über den Querschnitt des ersten Lagerbereichs (11) übersteht.

2. Arretiervorrichtung nach Anspruch 1, **dadurch gekennzeichnet, dass** der Bolzen (10) einen zweiten Lagerbereich (18, 23) zum Einstecken in eine Öffnung (19) eines zweiten Holms (8) aufweist, der sich koaxial zum ersten Lagerbereich (11) erstreckt, und dass der Feststellbereich (14) zwischen den Lagerbereichen (11; 18,23) angeordnet ist.

3. Arretiervorrichtung nach Anspruch 2, **dadurch gekennzeichnet, dass** der zweite Lagerbereich (18, 23) einen Querschnitt aufweist, der nicht über den Querschnitt des Feststellbereichs (14) übersteht.

4. Arretiervorrichtung nach Anspruch 3, **dadurch gekennzeichnet, dass** der zweite Lagerbereich (18, 23) eine quer zur Längsachse (15) orientierte Bohrung (21) aufweist.

5. Arretiervorrichtung nach einem der vorhergehenden Ansprüche, **dadurch gekennzeichnet, dass** der Feststellbereich (14) mehrere entlang seines Umfangs aufeinanderfolgende Kontaktflächen (16a-d) aufweist.

6. Arretiervorrichtung nach Anspruch 5, **dadurch gekennzeichnet, dass** eine Kontaktfläche (16a) mit minimalem Abstand von der Längsachse (15) und eine Kontaktfläche (16d) mit maximalem Abstand von der Längsachse (15) entlang einer gemeinsamen Kante (17a) aneinandergrenzen und dass zwischen einer von der gemeinsamen Kante (17a) abgewandten Kante (17b) der Kontaktfläche (16a) mit minimalem Abstand und einer von der gemeinsamen Kante (17a) abgewandten Kante (17d) der Kontaktfläche (16d) mit maximalem Abstand Kontaktflächen (16b, 16c) mit schrittweise zunehmenden Abstand von der Längsachse (15) aufeinander folgen.

7. Arretiervorrichtung nach Anspruch 5 oder 6, **dadurch gekennzeichnet, dass** der Querschnitt eines der Lagerbereiche (18) ein gleichseitiges Vieleck ist und der Querschnitt des Feststellbereichs (14) ein Vieleck mit gleicher Eckenzahl wie das Vieleck des einen Lagerbereichs (18) ist.

8. Arretiervorrichtung nach Anspruch 7, **dadurch gekennzeichnet, dass** entlang des wenigstens einen Holms (8) mehrere Öffnungen (19) mit zum Querschnitt des einen Lagerbereichs komplementärem Querschnitt verteilt sind und die Querschnitte der Öffnungen (19) schrittweise gegeneinander verdreht sind.

9. Arretiervorrichtung nach Anspruch 4, **dadurch gekennzeichnet, dass** entlang des wenigstens zweiten Holms (8) mehrere Öffnungen (19) verteilt sind, in die der zweite Lagerbereich (23) einsteckbar ist, dass die Öffnungen (19) jeweils wenigstens zum Teil durch an den zweiten Holm (8) angefügte Rohrabschnitte (24) gebildet sind und die Bohrung (21) des zweiten Lagerbereichs (23) verlängernde Bohrungen (25) in den Rohrabschnitten (24) gebildet sind.

10. Arretiervorrichtung nach einem der vorhergehenden Ansprüche, **dadurch gekennzeichnet, dass** an einem freiliegenden Ende (18) des Bolzens (10) eine Richtungsmarkierung (20) angebracht ist.

## Claims

1. A locking device for locking a drawbar (1) on an agricultural working machine, in particular a tractor, comprising at least one bar member (8, 9), in the longitudinal direction of which the drawbar (1) is adjustable, and at least one bolt (10) which can be inserted into an opening (12) in the bar member (9) and which has at least a first bearing region (11; 18, 23) for being received in the opening (12; 19) and a fixing region (14) for cooperating with the drawbar (1), wherein the fixing region (14) has at least one substantially planar contact surface (16a-d) for contacting the drawbar (1), wherein the first bearing region (11) and the fixing region (14) are successively disposed along a longitudinal axis (15) of the bolt (10), **characterised in that** the cross-section of the fixing region (14) does not project beyond the cross-section of the first bearing region (11).

2. A locking device according to claim 1 **characterised in that** the bolt (10) has a second bearing region (18, 23) for insertion into an opening (19) in a second bar member (8) which extends coaxially relative to the first bearing region (11) and the fixing region (14) is arranged between the bearing regions (11; 18, 23).

3. A locking device according to claim 2 **characterised in that** the second bearing region (18, 23) is of a cross-section which does not project beyond the cross-section of the fixing region (14).

4. A locking device according to claim 3 **characterised in that** the second bearing region (18, 23) has a bore (21) oriented transversely relative to the longitudinal axis (15).

5. A locking device according to one of the preceding claims **characterised in that** the fixing region (14) has a plurality of contact surfaces (16a-d) arranged in succession along its periphery.

6. A locking device according claim 5 **characterised in that** a contact surface (16a) with a minimum spacing from the longitudinal axis (15) and a contact surface (16d) with a maximum spacing from the longitudinal axis (15) adjoin each other along a common edge (17a) and contact surfaces (16b, 16c) with a spacing increasing stepwise from the longitudinal axis (15) are provided in succession between an edge (17b), that is remote from the common edge (17a), of the contact surface (16a) with the minimum spacing and an edge (17d), that is remote from the common edge (17a), of the contact surface (16d) with the maximum spacing.

7. A locking device according to claim 5 or claim 6 **characterised in that** the cross-section of one of the bearing regions (18) is an equilateral polygon and the cross-section of the fixing region (14) is a polygon with the same number of corners as the polygon of the one bearing region (18).

8. An locking device according to claim 7 **characterised in that** a plurality of openings (19) with a cross-section complementary to the cross-section of the one bearing region are distributed along the at least one bar member (8) and the cross-sections of the openings (19) are rotated stepwise relative to each other.

9. A locking device according to claim 4 **characterised in that** distributed along the at least one second bar member (8) are a plurality of openings (19) into which the second bearing region (23) can be inserted, the openings (19) are respectively at least partially formed by tube portions (24) attached to the second bar member (8) and bores (25) prolonging the bore (21) in the second bearing region (23) are formed in the tube portions (24).

10. A locking device according to one of the preceding claims **characterised in that** a direction marking (20) is disposed at an exposed end (18) of the bolt (10).

## Revendications

1. Dispositif de blocage pour bloquer une barre de traction oscillante (1) sur une machine de travail agricole, en particulier sur un tracteur, comprenant au moins une traverse (8, 9), dans la direction longitudinale de laquelle la barre de traction oscillante (1) est déplaçable, et au moins un goujon (10) qui est insérable dans un orifice (12) de la traverse (8, 9) et qui comporte au moins une première zone d'appui (11 ; 18, 23) apte à être reçue dans l'orifice (12 ; 19) et une zone d'immobilisation (14) apte à coopérer avec la barre de traction oscillante (11), la zone d'immobilisation (14) comportant au moins une surface de contact sensiblement plane (16a-d) pour venir en contact avec la barre de traction oscillante (1), la première zone d'appui (11) et la zone d'immobilisation (14) se succédant l'une à l'autre le long d'un axe longitudinal (15) du goujon (10), **caractérisé en ce que** la section transversale de la zone d'immobilisation (14) ne dépasse pas de la section transversale de la première zone d'appui (11).

2. Dispositif de blocage selon la revendication 1, **caractérisé en ce que** le goujon (10) comporte une seconde zone d'appui (18, 23) qui est apte à être insérée dans un orifice (19) d'une seconde traverse (8), et qui s'étend coaxialement à la première zone d'appui (11), et **en ce que** la zone d'immobilisation (14) est disposée entre les zones d'appui (11 ; 18, 23).

3. Dispositif de blocage selon la revendication 2, **caractérisé en ce que** la seconde zone d'appui (18, 23) présente une section transversale qui ne dépasse pas de la section transversale de la zone d'immobilisation (14).

4. Dispositif de blocage selon la revendication 3, **caractérisé en ce que** la seconde zone d'appui (18, 23) présente un perçage (21) orienté transversalement à l'axe longitudinal (15).

5. Dispositif de blocage selon une des revendications précédentes, **caractérisé en ce que** la zone d'immobilisation (14) comporte plusieurs surfaces de contact (16a-d) qui se succèdent sur sa périphérie.

6. Dispositif de blocage selon la revendication 5, **caractérisé en ce qu'**une surface de contact (16a) à distance minimale de l'axe longitudinal (15) et une surface de contact (16d) à distance maximale de l'axe longitudinal (15) sont contiguës l'une à l'autre suivant une arête commune (17a), et **en ce qu'**entre une arête (17b), située à l'opposé de l'arête commune (17a), de la surface de contact (16a) à distance minimale et une arête (17d), située à l'opposé de l'arête commune (17a), de la surface de contact (16d) à distance maximale se succèdent des surfaces de contact (16b, 16c) à distance progressivement croissante de l'axe longitudinal (15).

7. Dispositif de blocage selon la revendication 5 ou 6, **caractérisé en ce que** la section transversale de l'une des zones d'appui (18) est un polygone équilatéral, et la section transversale de la zone d'immobilisation (14) est un polygone avec un nombre de côtés identique à celui du polygone de l'une des zones d'appui (18).

8. Dispositif de blocage selon la revendication 7, **caractérisé en ce que** le long de la au moins une traverse (8) sont répartis plusieurs orifices (19) avec une section transversale complémentaire à la section transversale de l'une des zones d'appui, et les sections transversales des orifices (19) sont progressivement tournées les unes par rapport aux autres.

9. Dispositif de blocage selon la revendication 4, **caractérisé en ce que** le long de la au moins seconde traverse (8) sont répartis plusieurs orifices (19) dans lesquels la seconde zone d'appui (23) peut être insérée, **en ce que** les orifices (19) sont respectivement formés au moins en partie par des portions tubulaires (24) ajoutées à la seconde traverse (8), et des perçages (25) prolongeant le perçage (21) de la seconde zone d'appui (23) sont ménagés dans les portions tubulaires (24).

10. Dispositif de blocage selon une des revendications précédentes, **caractérisé en ce qu'**à une extrémité libre (18) du goujon (10) est disposé un marquage d'orientation (20).
